# EUROPEAN PATENT SPECIFICATION

(11) **EP 3 369 633 B1**
(45) Date of publication and mention of the grant of the patent: **14.04.2021**
(21) Application number: 16858882.0
(22) Date of filing: 26.09.2016
(51) Int. Cl.: B60T 8/1761, B60T 1/10, B60T 8/1766, B60T 8/88

(54) **ACTIVE SAFETY CONTROL SYSTEM AND METHOD FOR VEHICLE**
AKTIVES SICHERHEITSKONTROLLSYSTEM UND VERFAHREN FÜR EIN FAHRZEUG
SYSTÈME ET PROCÉDÉ DE COMMANDE DE SÉCURITÉ ACTIVE POUR VÉHICULE

(30) Priority: 26.10.2015 CN 201510703791
(43) Date of publication of application: 05.09.2018
(73) Proprietor: BYD Company Limited, Shenzhen, Guangdong 518118 (CN)
(72) Inventor: LIAN, Yubo, Shenzhen Guangdong 518118 (CN); LUO, Hongbin, Shenzhen Guangdong 518118 (CN); ZHANG, Jintao, Shenzhen Guangdong 518118 (CN); YANG, Dongsheng, Shenzhen Guangdong 518118 (CN)
(74) Representative: m patent group
(86) International application number: PCT/CN2016/100170
(87) International publication number: WO 2017/071446

(56) References cited:
- EP-A1- 2 679 433
- WO-A1-2013/045584
- CN-A- 103 068 643
- CN-A- 104 494 585
- DE-A1-102007 029 228
- DE-A1-102013 224 313
- US-A- 5 318 355
- US-A1- 2008 210 496

## Description

### Field of the Invention

The present invention relates to the technical field of vehicles, and particularly, relates to an active safety control system and method for a vehicle.

### Background Art

With social development and decrease of oil fossil energy as well as increasingly serious environment pollution, various pure electric vehicles using motors as driving force have come out successively, in which the electric vehicles driven by hub motors are the main development direction of electric vehicles in the future. Compared with traditional vehicles, heavy engines and gearboxes are removed from the electric vehicles driven by four hub motors, so that the whole vehicles are light and simple in structure. The braking safety of vehicles is also particularly important while the problems about energy and environment are solved. An anti-lock braking system (ABS) of a vehicle can prevent the vehicle from producing the phenomena of wheel lock, drift, sideslip and the like in the braking process, thus improving the safety and reliability of the vehicle in the braking process. The electric vehicle often adopts a hybrid braking mode of combining mechanical braking with regenerative braking or combining hydraulic braking with regenerative braking, wherein the regenerative braking only plays a role in energy recovery during slow braking due to limited torque and limitation of the battery state of charge (SOC), hydraulic or mechanical braking is also needed during emergency braking, and the regenerative braking cannot realize lock adjustment.

US 5 318 355 A describes an electric vehicle including a braking system that can detect a braking pedal signal, signals corresponding to a speed of the wheels and is configured to brake the vehicle by use of mechanical brakes, including a hydraulic braking system, and a single electric motor in regeneration mode.

EP 2 679 433 A1 describes an electric vehicle including a braking system that can detect a braking pedal signal, signals corresponding to a speed of the wheels and is configured to brake the vehicle by use of mechanical brake. For each wheel of the vehicle an electrical motor is provided.

### Summary of the Invention

The present invention is aimed at solving one of the above technical problems to a certain extent at least.

Thus, a first object of the present invention is to provide an active safety control system for a vehicle, according to independent claim 1. A second object of the present invention is to provide an active safety control method for a vehicle, according to independent claim 7.

A third object of the present invention is to provide a vehicle.

In order to fulfill the above objects, the active safety control system for the vehicle in an embodiment of the first aspect of the present invention includes: a pedal detection device, configured to detect pedal signals of the vehicle; a motor state detection device, configured to detect the states of a plurality of motors of the vehicle; a plurality of wheel speed detection devices, arranged on a plurality of wheels of the vehicle, and configured to detect speeds of the wheels and generating wheel speed detection signals; and a control device, used for obtaining braking torques according to the pedal signals and the wheel speed detection signals, determining a corresponding braking mode according to the states of the plurality of motors, and controlling a plurality of brakes, the plurality of motors and a hydraulic braking device of the vehicle according to the braking mode and the braking torques.

According to the active safety control system for the vehicle in an embodiment of the present invention, after the braking mode is determined, corresponding braking torques of the four wheels can be controlled according to wheel speed data and vehicle speed data to implement anti-lock adjustment, so that the vehicle decelerates or stops according to the driver's intention to prevent locking.

In order to fulfill the above objects, the active safety control method for the vehicle in an embodiment of the second aspect of the present invention includes: detecting pedal signals of the vehicle, detecting speeds of wheels and generating wheel speed detection signals; obtaining braking torques according to the pedal signals and the wheel speed detection signals; detecting the states of a plurality of motors of the vehicle, and determining a corresponding braking mode according to the states of the plurality of motors; and controlling a plurality of brakes, the plurality of motors and a hydraulic braking device of the vehicle according to the braking mode and the braking torques.

According to the active safety control method for the vehicle in an embodiment of the present invention, after the braking mode is determined, corresponding braking torques of the four wheels can be controlled according to wheel speed data and vehicle speed data to implement anti-lock adjustment, so that the vehicle decelerates or stops according to the driver's intention to prevent locking.

In order to fulfill the above objects, the vehicle in an embodiment of the third aspect of the present invention includes the active safety control system for the vehicle as mentioned in the embodiment of the first aspect, a plurality of wheels, a power battery, a plurality of motors arranged on the plurality of wheels, a plurality of brakes arranged on the plurality of wheels and a hydraulic braking device, wherein the active safety control system is connected with the plurality of motors, the plurality of brakes and the hydraulic braking device respectively, and the power battery is connected with the plurality of motors respectively.

According to the vehicle using said active safety control system for the vehicle in an embodiment of the present invention, after the braking mode is determined, corresponding braking torques of the four wheels can be controlled according to wheel speed data and vehicle speed data to implement anti-lock adjustment, so that the vehicle decelerates or stops according to the driver's intention to prevent locking.

Additional aspects and advantages of the present invention will be partially given in the following description, and part of them will become obvious from the following description or be learnt via practice of the present invention.

### Brief Description of the Drawings

The above-mentioned and/or additional aspects and advantages of the present invention will become obvious and be easily understood from the following description of the embodiments in combination with the accompanying drawings, in which:
Fig. 1 is a structural schematic diagram of an active safety control system for a vehicle according to an embodiment of the present invention;
Fig. 2 is a structural schematic diagram of the active safety control system for the vehicle according to another embodiment of the present invention;
Fig. 3 is an example diagram of pedal sensation fed back by a pedal sensation simulator according to an embodiment of the present invention; and
Fig. 4 is a flow diagram of an active safety control method for a vehicle according to an embodiment of the present invention.

### Detailed Description of the Embodiments

The embodiments of the present invention will be described in detail below, the examples of the embodiments are shown in the accompanying drawings, and signs that are same or similar throughout indicate same or similar elements or elements having same or similar functions. The embodiments described below by referring to the drawings are exemplary, and are used for interpreting the present invention, rather than limiting the present invention.

An active safety control system and method for a vehicle in the embodiments of the present invention will be described below by referring to the accompanying drawings.

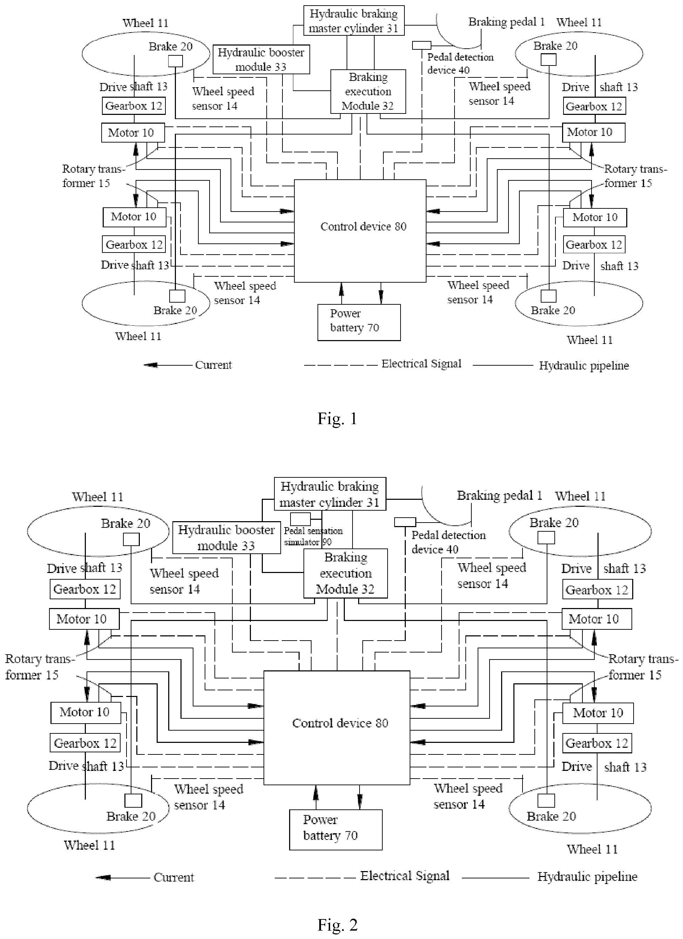

Fig. 1 is a structural schematic diagram of an active safety control system for a vehicle according to an embodiment of the present invention. It should be noted that the active safety control system in the embodiment of the present invention can be applied to a four-wheel driven electric vehicle.

As shown in Fig. 1, the vehicle may include a pedal detection device 40, a motor state detection device 50 (not shown in Fig. 1), a plurality of wheel speed detection devices 60 (not shown in Fig. 1), a power battery 70 and a control device 80. The active safety control system includes the pedal detection device 40, the motor state detection device 50, the plurality of wheel speed detection devices 60 and the control device 80.

As shown in Fig. 1, a plurality of motors 10 and a plurality of brakes 20 are all arranged on a plurality of wheels 11, i.e., each wheel 11 corresponds to a motor 10 and a brake 20. The power battery 70 is connected with the plurality of motors 10 respectively.

Moreover, as shown in Fig. 1, the vehicle may further include a brake pedal 1, four gearboxes 12 and four drive shafts 13. In the embodiment of the present invention, as shown in Fig. 1, a hydraulic braking device may include a hydraulic braking master cylinder 31, a braking execution module 32 connected with the hydraulic braking master cylinder 31, and a hydraulic booster module 33 connected with the hydraulic braking master cylinder 31 and the braking execution module 32 respectively.

Specifically, the pedal detection device 40 can be configured to detect pedal signals of the vehicle. In an embodiment of the present invention, the pedal detection device 40 may be a pedal travel sensor. More specifically, after the driver steps on the pedal in the vehicle, the pedal detection device 40 can detect pedal signals generated by the brake pedal 1, e.g., a pedal depth signal and a pedal depth change rate signal.

The motor state detection device 50 can be configured to detect the states of the plurality of motors 10. More specifically, the motor state detection device 50 can detect the working state of each motor 10 to determine that the current state of each motor 10 is a failure state or a normal state.

The plurality of wheel speed detection devices are arranged on the plurality of wheels 11, and can be configured to detect speeds of the wheels 11 and generating wheel speed detection signals. In the embodiment of the present invention, as shown in Fig. 1, the plurality of wheel speed detection devices may include a plurality of rotary transformers 15 and/or a plurality of wheel speed sensors 14 and the like. That is to say, any set of wheel speed measuring systems, e.g., four rotary transformers, or four wheel speed sensors, etc., can be used in the active safety control system of the embodiment of the present invention, or two sets of wheel speed measuring systems can be used simultaneously, i.e., four rotary transformers and four wheel speed sensors are used simultaneously and can verify each other, thus, when one set of wheel speed measuring system fails, the data detected by the other set of wheel speed measuring system can be used as a judgment basis.

The control device 80 can be used for judging driver's braking intention according to the pedal signals and the wheel speed detection signals, i.e., braking torques required by the wheels, determining a corresponding braking mode according to the states of the plurality of motors 10, and controlling the plurality of brakes 20, the plurality of motors 10 and the hydraulic braking device 30 according to the braking mode and the braking intention. That is to say, after determining the braking mode, the control device 80 can calculate the slip rate of the four wheels in real time according to the wheel speed data provided by the plurality of wheel speed detection devices 60 and vehicle speed data, and when the wheels are locked due to too large slip rate, the control device 80 can control the corresponding braking torques of the four wheels to implement anti-lock adjustment, so that the vehicle decelerates or stops according to the driver's intention.

Specifically, in an embodiment of the present invention, the specific implementation process that the control device 80 judges driver's braking intention according to the pedal signals and the wheel speed detection signals is as follows: judging a required braking deceleration of the vehicle according to the pedal signals, and calculating braking torques required by the plurality of wheels 11 according to the required braking deceleration and the wheel speed detection signals. More specifically, after receiving the pedal depth signal α and the pedal depth change rate signal β detected by the pedal detection device 40, the control device 80 can judge a vehicle required braking deceleration according to the pedal depth signal α and the pedal depth change rate signal β, i.e., the vehicle required braking deceleration a=f(α,β), and then can calculate braking torques that need to be provided by a front axle and a rear axle, i.e., braking torques required by the wheels according to the vehicle required braking deceleration, the wheel speed detection signals and an ideal front and rear axle braking force allocation curve.

In an embodiment of the present invention, the specific implementation process that the control device 80 determines a corresponding braking mode according to the states of the plurality of motors 10 is as follows: when the plurality of motors 10 are all in a normal state, determining that the corresponding braking mode is a regenerative braking control mode; when one motor 10 or two motors 10 on the same axle among the plurality of motors 10 are in a failure state, determining that the corresponding braking mode is a hybrid braking control mode; and when two motors 10 on different axles or more than two motors 10 among the plurality of motors 10 are in a failure state, determining that the corresponding braking mode is a hydraulic braking control mode.

That is to say, the working states of the four motors 10 of the vehicle can be detected, and the corresponding braking mode is determined by judging whether each motor 10 works normally: braking torques produced by the four wheels are preferentially provided by the motors 10, the response of motor braking is faster than that of hydraulic braking, and if the four motors 10 simultaneously provide regenerative braking, the driver's braking intention can be quickly achieved and energy can be recovered via regenerative braking, so when the four motors 10 all work normally, a regenerative braking mode can be determined as the corresponding braking mode, i.e., the four motors 10 simultaneously execute braking; when one motor 10 or two motors 10 on the same axle fail, the failing motors 10 cannot provide regenerative braking torques, only hydraulic braking can be started for supplementing, in addition, the responses of motor braking and hydraulic braking are asynchronous, even if a single motor 10 fails, the other motor 10 on the same axle as the failing motor 10 also needs to be shut off in order to ensure left and right coordination of braking, corresponding hydraulic braking is executed instead, and in this case, the mode including motor braking and hydraulic braking can be referred to as a hybrid braking control mode; and when two motors 10 on different axles or more than two motors 10 fail, the failing motors 10 cannot provide regenerative braking torques, only hydraulic braking can be started for supplementing, in addition, the responses of motor braking and hydraulic braking arc asynchronous, the four motors 10 on the two axles need to be shut off in order to ensure left and right coordination of braking, hydraulic braking is executed instead, and in this case, the mode only including hydraulic braking can be referred to as a hydraulic braking control mode.

After determining the corresponding braking mode according to the states of the plurality of motors 10, the control device 80 can correspondingly control the plurality of brakes 20, the plurality of motors 10 and the hydraulic braking device 30 according to the braking mode and the braking intention. The control processes for different braking modes will be described below.

In an embodiment of the present invention, when the braking mode is the regenerative braking control mode, the control device 80 can control the plurality of motors 10 to be converted into a generator working mode, drive rotors of the plurality of motors 10 to cut magnetic induction lines according to the braking torques required by the plurality of wheels to output corresponding regenerative braking torques, send the regenerative braking torques to the corresponding wheels 11, and store the electrical energy generated when the rotors of the plurality of motors 10 cut magnetic induction lines into the power battery 70.

More specifically, when the regenerative braking control mode is determined as the braking mode, the control device 80 can control the four motors 10 to be converted from a motor working mode to a generator working mode, the kinetic energy of the vehicle drives rotors of the motors 10 to cut magnetic induction lines and is thus transformed into electrical energy, and the electrical energy is stored into the power battery 70. When the rotors of the motors 10 cut magnetic induction lines, the motors 10 reversely output regenerative braking torques, which are transferred to the wheels 11 via the gearboxes 12 and the drive shafts 13. The control device 80 simultaneously controls an electromagnetic valve in the hydraulic braking device 30 in a closed state, a motor, a booster pump and an energy accumulator in the hydraulic booster module 33 do not work, and the braking pipeline does not output hydraulic pressure.

In an embodiment of the present invention, when the braking mode is the hybrid braking control mode, the control device 80 is specifically used for: shutting off the two motors 10 on the axle where the failing motor 10 is located, controlling the remaining motors 10 to be converted into a generator working mode, driving rotors of the remaining motors 10 to cut magnetic induction lines according to the braking torques required by the wheels 11 corresponding to the remaining motors 10 to output corresponding regenerative braking torques, and sending the regenerative braking torques to the corresponding wheels 11; and opening an electromagnetic valve corresponding to the axle where the failing motor 10 is located in the hydraulic braking device 30 to output hydraulic pressure to the brakes 20 corresponding to the two motors 10, and controlling the brakes 20 according to the braking torques required by the wheels 11 corresponding to the two motors to output corresponding braking torques.

More specifically, when the hybrid braking control mode is determined as the braking mode, the control device 80 can be used for cutting off the braking torque output of the two motors 10 on the axle (e.g., front axle or rear axle) where the failing motor 10 is located, the two motors 10 on the other axle normally output regenerative braking torques, and the regenerative braking torques are transferred to the wheels 11 via the corresponding gearboxes 12 and drive shafts 13. The control device 80 simultaneously controls the electromagnetic valve in the hydraulic braking device 30, the electromagnetic valve on the axle where the failing motor 10 is located is opened to output hydraulic pressure to the corresponding brakes 20, and brake caliper pistons in the brakes 20 push brake blocks to rub with brake discs to output braking torques, wherein the power source of braking hydraulic pressure is provided by the hydraulic booster module 33.

In an embodiment of the present invention, when the braking mode is the hydraulic braking control mode, the control device 80 can be used for shutting off the plurality of motors 10 (i.e., all motors), simultaneously opening electromagnetic valves corresponding to the axles where the plurality of motors 10 are located in the hydraulic braking device 30 to output hydraulic pressure to the plurality of brakes 20, and controlling the plurality of brakes 20 according to the braking torques required by the wheels 11 corresponding to the plurality of motors 10 to output corresponding braking torques.

More specifically, when the hydraulic braking control mode is determined as the braking mode, the control device 80 can be used for shutting off the four motors 10, simultaneously controlling the electromagnetic valves in the hydraulic braking device 30, and opening electromagnetic valves on the axles where the failing motors 10 are located to output hydraulic pressure to the corresponding brakes 20, and brake caliper pistons in the brakes 20 push brake blocks to rub with brake discs to output braking torques, wherein the power source of braking hydraulic pressure is provided by the hydraulic booster module 33.

Further, in one embodiment of the present invention, as shown in Fig. 2, the active safety control system may further include a pedal sensation simulator 90, which can be used for feeding pedal sensation without hydraulic fluctuation back to the brake pedal 1 of the vehicle. As shown in Fig. 2, the pedal sensation simulator 90 can be connected with the hydraulic braking master cylinder 31 and the braking execution module 32 in the hydraulic braking device 30.

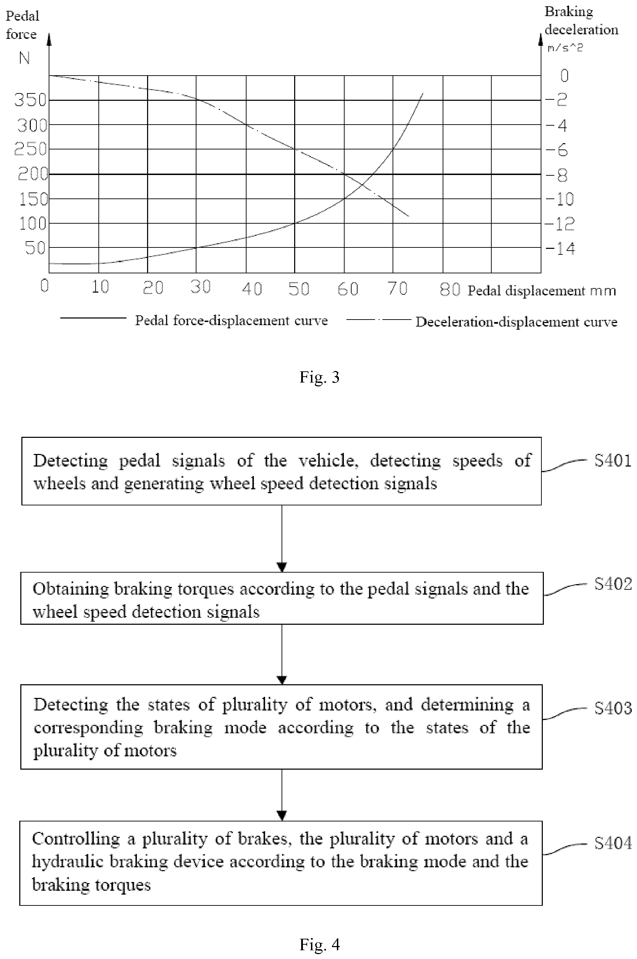

That is to say, during ABS control, no matter in complete regenerative braking control, hybrid braking control or complete hydraulic braking control, the pedal sensation simulator 90 can work all the time and feed pedal sensation without hydraulic fluctuation back to the brake pedal 1. Fig. 3 is an example diagram of pedal sensation fed back by the pedal sensation simulator according to an embodiment of the present invention. As shown in Fig. 3, the pedal force is positively correlated to the pedal displacement, i.e., if the pedal displacement is larger, the pedal force is larger; and the braking deceleration is negatively correlated to the pedal displacement, i.e., if the pedal displacement is larger, the braking deceleration is smaller. Thus, the brake pedal can be hydraulically decoupled with the braking pipeline via the pedal sensation simulator, and the brake pedal can also feed back very good pedal sensation even during ABS control in hydraulic braking, so that the braking comfort is improved.

To sum up, the active safety control system in an embodiment of the present invention mainly adopts the existing four-wheel side motors and hydraulic braking system (e.g., including a hydraulic braking device, brakes, etc.) as a braking execution mechanism, thereby solving the problems of slow response and low regenerative braking feedback utilization rate in the existing pure hydraulic braking system. In pure motor ABS control, once one or more motors fail, the motors and the hydraulic braking system are combined for ABS control. Meanwhile, the brake pedal force is decoupled from the pressure for implementing the braking pipeline, thereby avoiding brake pedal discomfort caused by pipeline pressure fluctuation in ABS control.

According to the active safety control system for the vehicle in an embodiment of the present invention, ABS control can be preferentially implemented by using the regenerative braking feedback torques of the wheel side motors to quickly control vehicle stability and improve the regenerative braking feedback rate, moreover, under the condition that failure of one or more motors is detected, ABS control on all motors on the axle (e.g., front axle or rear axle) where the failing motors are located is cut off via the control device, and hydraulic braking is combined with the normal front axle or rear axle motors for ABS control, so that the safety can be ensured, the regenerative braking feedback can also be realized, and the braking control precision is improved.

In order to realize the above embodiment, the present invention further provides an active safety control method for a vehicle.

Fig. 4 is a flow diagram of an active safety control method for a vehicle according to an embodiment of the present invention. It should be noted that the vehicle in an embodiment of the present invention may include a plurality of motors, a plurality of brakes, a hydraulic braking device and a power battery. The hydraulic braking device may include a hydraulic braking master cylinder, a braking execution module connected with the hydraulic braking master cylinder, and a hydraulic booster module connected with the hydraulic braking master cylinder and the braking execution module respectively.

As shown in Fig. 4, the active safety control method for the vehicle may include:
S401: detecting pedal signals of the vehicle, detecting speeds of wheels and generating wheel speed detection signals.

Specifically, after the driver steps on the pedal in the vehicle, pedal signals generated by the brake pedal, e.g., a pedal depth signal α and a pedal depth change rate signal β, can be detected via a pedal travel sensor in the vehicle, speeds of a plurality of wheels can be detected via a plurality of rotary transformers and/or a plurality of wheel speed sensors, and wheel speed detection signals are generated. It should be noted, in an embodiment of the present invention, two sets of wheel speed measuring systems can be used simultaneously, i.e., four rotary transformers and four wheel speed sensors are used simultaneously and can verify each other, thus, when one set of wheel speed measuring system fails, the data detected by the other set of wheel speed measuring system can be used as a judgment basis.

S402: obtaining braking torques according to the pedal signals and the wheel speed detection signals.

Specifically, in an embodiment of the present invention, a required braking deceleration of the vehicle can be judged according to the pedal signals, and braking torques required by the plurality of wheels are calculated according to the required braking deceleration and the wheel speed detection signals. More specifically, after the pedal depth signal α and the pedal depth change rate signal β are received, a vehicle required braking deceleration, i.e., a vehicle required braking deceleration a=f(α,β), can be judged according to the pedal depth signal α and the pedal depth change rate signal β, and then braking torques that need to be provided by a front axle and a rear axle, i.e., braking torques required by the wheels, can be calculated according to the vehicle required braking deceleration, the wheel speed detection signals and an ideal front and rear axle braking force allocation curve.

S403: detecting the states of a plurality of motors, and determining a corresponding braking mode according to the states of the plurality of motors.

Specifically, in the embodiment of the present invention, when the plurality of motors are all in a normal state, a regenerative braking control mode is determined as the corresponding braking mode; when one motor or two motors on the same axle among the plurality of motors are in a failure state, a hybrid braking control mode is determined as the corresponding braking mode; and when two motors on different axles or more than two motors among the plurality of motors arc in a failure state, a hydraulic braking control mode is determined as the corresponding braking mode, wherein the two motors are arranged on different axles.

More specifically, after the driver's braking intention is acquired, the working states of the four motors of the vehicle can be detected, and the corresponding braking mode is determined by judging whether each motor works normally: braking torques produced by the four wheels are preferentially provided by the motors, the response of motor braking is faster than that of hydraulic braking, and if the four motors simultaneously provide regenerative braking, driver's braking intention can be quickly achieved and energy can be recovered via the regenerative braking, so when the four motors all work normally, a regenerative braking mode can be determined as the corresponding braking mode, i.e., the four motors simultaneously execute braking; when one motor or two motors on the same axle fail, the failing motors cannot provide regenerative braking torques, only hydraulic braking can be started for supplementing, in addition, the responses of motor braking and hydraulic braking are asynchronous, even if a single motor fails, the other motor on the same axle as the failing motor also needs to be shut off in order to ensure left and right coordination of braking, corresponding hydraulic braking is executed instead, and in this case, the mode including motor braking and hydraulic braking can be referred to as a hybrid braking control mode; and when two motors on different axles or more than two motors fail, the failing motors cannot provide regenerative braking torques, only hydraulic braking can be started for supplementing, in addition, the responses of motor braking and hydraulic braking are asynchronous, the four motors on the two axles need to be shut off in order to ensure left and right coordination of braking, hydraulic braking is executed instead, and in this case, the mode only including hydraulic braking can be referred to as a hydraulic braking control mode.

S404: controlling a plurality of brakes, the plurality of motors and the hydraulic braking device according to the braking mode and the braking torques.

Specifically, after the braking mode is determined, the slip rate of the four wheels can be calculated in real time according to wheel speed data provided by rotary transformers and/or wheel speed sensors and vehicle speed data, and when the wheels are locked due to too large slip rate, the corresponding braking torques of the four wheels can be controlled for anti-lock adjustment, so that the vehicle decelerates or stops according to driver's intention.

The control processes for different braking modes will be described below.

Specifically, in an embodiment of the present invention, when the braking mode is the regenerative braking control mode, the plurality of motors are controlled to be converted into a generator working mode, and rotors of the plurality of motors are driven to cut magnetic induction lines according to the braking torques required by the plurality of wheels to output corresponding regenerative braking torques; the regenerative braking torques are sent to the corresponding wheels; and the electrical energy generated when the rotors of the plurality of motors cut magnetic induction lines is stored into the power battery.

More specifically, when the regenerative braking control mode is determined as the braking mode, the four motors can be controlled to be converted from a motor working mode to a generator working mode, the kinetic energy of the vehicle drives rotors of the motors to cut magnetic induction lines and is thus transformed into electrical energy, and the electrical energy is stored into the power battery. When the rotors of the motors cut magnetic induction lines, the motors reversely output regenerative braking torques, which are transferred to the wheels via gearboxes and drive shafts of the vehicle. Meanwhile, an electromagnetic valve in the hydraulic braking device is controlled in a closed state, a motor, a booster pump and an energy accumulator in the hydraulic booster module do not work, and the braking pipeline does not output hydraulic pressure.

In an embodiment of the present invention, when the braking mode is the hybrid braking control mode, the two motors on the axle where the failing motor is located are shut off; the remaining motors are controlled to be converted into a generator working mode, rotors of the remaining motors are driven to cut magnetic induction lines according to the braking torques required by the wheels corresponding to the remaining motors to output corresponding regenerative braking torques; the regenerative braking torques arc sent to the corresponding wheels; an electromagnetic valve corresponding to the axle where the failing motor is located in the hydraulic braking device is opened, hydraulic pressure is output to the brakes corresponding to the two motors, and the brakes are controlled according to the braking torques required by the wheels corresponding to the two motors to output corresponding braking torques.

More specifically, when the hybrid braking control mode is determined as the braking mode, the braking torque output of the two motors on the axle (e.g., front axle or rear axle) where the failing motor is located can be cut off, the two motors on the other axle normally output regenerative braking torques, and the regenerative braking torques are transferred to the wheels via the corresponding gearboxes and drive shafts. Meanwhile, the electromagnetic valve in the hydraulic braking device is controlled, the electromagnetic valve on the axle where the failing motor is located is opened to output hydraulic pressure to the corresponding brakes, and brake caliper pistons in the brakes push brake blocks to rub with brake discs to output braking torques, wherein the power source of braking hydraulic pressure is provided by the hydraulic booster module.

In an embodiment of the present invention, when the braking mode is the hydraulic braking control mode, the plurality of motors (i.e., all motors) are shut off, and the electromagnetic valves corresponding to the axles where the plurality of motors are located in the hydraulic braking device are simultaneously opened to output hydraulic pressure to the plurality of brakes; and the plurality of brakes are controlled according to the braking torques required by the wheels corresponding to the plurality of motors to output corresponding braking torques.

More specifically, when the hydraulic braking control mode is determined as the braking mode, the four motors can be shut off, meanwhile, the electromagnetic valves in the hydraulic braking device are controlled, the electromagnetic valves on the axles where the failing motors are located are opened to output hydraulic pressure to the corresponding brakes, and brake caliper pistons in the brakes push brake blocks to rub with brake discs to output braking torques, wherein the power source of braking hydraulic pressure is provided by the hydraulic booster module.

Further, in one embodiment of the present invention, the active safety control method may further include: feeding pedal sensation without hydraulic fluctuation back to the brake pedal of the vehicle. Specifically, pedal sensation without hydraulic fluctuation can be fed back to the brake pedal of the vehicle via a pedal sensation simulator.

That is to say, during ABS control, no matter in complete regenerative braking control, hybrid braking control or complete hydraulic braking control, the pedal sensation simulator can work all the time and feed pedal sensation without hydraulic fluctuation back to the brake pedal. Fig. 3 is an example diagram of pedal sensation fed back by the pedal sensation simulator according to an embodiment of the present invention. As shown in Fig. 3, the pedal force is positively correlated to the pedal displacement, i.e., if the pedal displacement is larger, the pedal force is larger; and the braking deceleration is negatively correlated to the pedal displacement, i.e., if the pedal displacement is larger, the braking deceleration is smaller. Thus, the brake pedal can be hydraulically decoupled with the braking pipeline via the pedal sensation simulator, and the brake pedal can also feed back very good pedal sensation even during ABS control in hydraulic braking, so that the braking comfort is improved.

To sum up, the active safety control method in an embodiment of the present invention mainly adopts the existing four-wheel side motors and hydraulic braking system (e.g., including a hydraulic braking device, brakes, etc.) as a braking execution mechanism, thereby solving the problems of slow response and low regenerative braking feedback utilization rate in the existing pure hydraulic braking system. In pure motor ABS control, once one or more motors fail, the motors and the hydraulic braking system are combined for ABS control. Meanwhile, the brake pedal force is decoupled from the pressure for implementing the braking pipeline, thereby avoiding brake pedal discomfort caused by pipeline pressure fluctuation in ABS control.

According to the active safety control method for the vehicle in an embodiment of the present invention, ABS control can be preferentially implemented by using the regenerative braking feedback torques of the wheel side motors to quickly control vehicle stability and improve the regenerative braking feedback rate, moreover, under the condition that failure of one or more motors is detected, ABS control on all motors on the axle (e.g., front axle or rear axle) where the failing motors are located is cut off via the control device, and hydraulic braking is combined with the normal front axle or rear axle motors for ABS control, so that the safety can be ensured, the regenerative braking feedback can also be realized, and the braking control precision is improved.

In the description of this specification, reference terms "one embodiment", "some embodiments", "example", "specific example", or "some examples" and the like mean that the specific features, structures, materials or characteristics described in combination with embodiments or examples arc included in at least one embodiment or example of the present invention. In the specification, the schematic expression of said terms may not necessarily indicate the same embodiment or example. Moreover, the described specific features, structures, materials or characteristics can be appropriately combined in one or more embodiments or examples. Furthermore, different embodiments or examples described in this specification and features of the different embodiments or examples can be combined by those skilled in the art without contradiction.

Moreover, the terms "first" and "second" are merely for the sake of description, but cannot be understood as indicating or hinting the relative importance or implying the quantity of the indicated technical features. Thus, the features defined with "first" and "second" may explicitly or implicitly include at least one of the features. In the description of the present invention, "a plurality of" means at least two, e.g., two, three, etc., unless otherwise specified.

The description of any process or method described in the flow diagram or in other ways herein may be understood as a module, a fragment or a part expressing a code of an executable instruction including one or more steps for realizing specific logic functions or processes, and the scope of the preferred embodiments of the present invention includes additional implementation, wherein the functions may not be executed according to the shown or discussed sequence, including substantially simultaneous manner or opposite sequence, which should be understood by those skilled in the art of the embodiments of the present invention.

Logics and/or steps expressed in the flow diagrams or described herein in other ways, for example, can be considered as a sequencing table of executable instructions for realizing logical functions, and can be embodied in any computer-readable medium, and used by an instruction execution system, device or equipment (e.g., a computer-based system, a processor-containing system, or other system that can extract an instruction from the instruction execution system, device or equipment and execute the instruction), or used in combination with the instruction execution system, device or equipment. In terms of this specification, the "computer-readable medium" may be any device that can include, store, communicate, propagate or transport programs used by the instruction execution system, device or equipment or used in combination with the instruction execution system, device or equipment. The computer-readable medium in more specific examples (a non-exhaustive list) includes: an electrical connection part (electronic device) having one or more wires, a portable computer disk cartridge (magnetic device), a random access memory (RAM), a read-only memory (ROM), an erasable programmable read-only memory (EPROM or flash memory), an optical fiber device, and a portable compact disc read-only memory (CDROM). In addition, the computer-readable medium even can be paper or other appropriate medium on which said programs are printed, for example, said programs can be obtained in an electronic mode by optically scanning paper or other medium and then editing, interpreting or processing it in other appropriate mode, and then the programs are stored in a computer memory.

It should be understood that all parts of the present invention can be realized via hardware, software, firmware or a combination thereof. In the above embodiments, multiple steps or methods can be implemented by software or firmware that is stored in a memory and executed by a proper instruction execution system. For example, if they are implemented by hardware, as in another embodiment, they can be implemented by using one of the following technologies known in the art or a combination thereof: a discrete logic circuit with a logic gate circuit for realizing logic functions on data signals, a dedicated integrated circuit with an appropriate combined logic gate circuit, a programmable gate array (PGA), a field programmable gate array (FPGA), etc.

It could be understood by those of ordinary skill in the art that all of or part of steps of the method of the above embodiment can be implemented by instructing relevant hardware via a grogram, the program can be stored in a computer-readable storage medium, and when the program is executed, one of the steps of the method embodiment or their combination is executed.

Furthermore, the functional units in the embodiments of the present invention may be integrated in one processing module, or the units separately and physically exist, or two or more units arc integrated in one module. The above-mentioned integrated module may be realized in the form of hardware or a software functional module. When the integrated module is realized in the form of a software functional module and sold or used as an independent product, it can also be stored in a computer-readable storage medium.

The aforementioned storage medium may be a read-only memory, a magnetic disc or an optical disc, etc. Although the embodiments of the present invention are shown and described above, it could be understood that said embodiments are exemplary and cannot be understood as limiting the present invention. Changes, modifications, substitutions and variations could be made to the embodiments by those of ordinary skilled in the art within the scope of the present invention, as defined by the appended claims.

## Claims

1. An active safety control system for a vehicle, comprising:
a pedal detection device (40), configured to detect pedal signals of the vehicle;
a motor state detection device (50), configured to detect the states of a plurality of motors (10) of the vehicle;
a plurality of wheel speed detection devices (60), arranged on a plurality of wheels (11) of the vehicle, and configured to detect speeds of the wheels and generating wheel speed detection signals; and
a control device (80), configured to obtain braking torques according to the pedal signals and the wheel speed detection signals, determine a corresponding braking mode according to the states of the plurality of motors, **characterized in that** the control device (80) is configured to control a plurality of brakes (20), the plurality of motors and a hydraulic braking device of the vehicle according to the braking mode and the braking torques,
wherein the control device (80) further is configured to:
when the plurality of motors (10) are all in a normal state, determine that the corresponding braking mode is a regenerative braking control mode;
when one motor or two motors on the same axle among the plurality of motors are in a failure state, determine that the corresponding braking mode is a hybrid braking control mode; and
when two motors on different axles or more than two motors among the plurality of motors are in a failure state, determine that the corresponding braking mode is a hydraulic braking control mode.

2. The active safety control system for the vehicle as described in claim 1, **characterized in that** the control device (80) is configured to:
obtain a required braking deceleration of the vehicle according to the pedal signals, and obtain the braking torques required by the plurality of wheels according to the required braking deceleration and the wheel speed detection signals, and/or
**in that** the braking mode comprises a regenerative braking control mode, a hybrid braking control mode and a hydraulic braking control mode.

3. The active safety control system for the vehicle as described in claim 1 or 2, **characterized in that** the control device (80) is configured to:
when the braking mode is the regenerative braking control mode, control the plurality of motors to enter a generator working mode, driving rotors of the plurality of motors to cut magnetic induction lines according to the braking torques required by the plurality of wheels to output corresponding regenerative braking torques, send the regenerative braking torques to the corresponding wheels, and store the electrical energy generated when the rotors of the plurality of motors cut magnetic induction lines into the power battery.

4. The active safety control system for the vehicle as described in any of the preceding claims, **characterized in that** the control device (80) is configured to:
when the braking mode is the hybrid braking control mode, close the two motors on the axle where the failing motor is located, control the remaining motors to be converted into a generator working mode, drive rotors of the remaining motors to cut magnetic induction lines according to the braking torques required by the wheels corresponding to the remaining motors to output corresponding regenerative braking torques, and send the regenerative braking torques to the corresponding wheels; and
open an electromagnetic valve corresponding to the axle where the failing motor is located in the hydraulic braking device to output hydraulic pressure to the brakes corresponding to the two motors, and controlling the brakes according to the braking torques required by the wheels corresponding to the two motors to output corresponding braking torques.

5. The active safety control system for the vehicle as described in any of the preceding claims, **characterized in that** the control device is configured to:
when the braking mode is the hydraulic braking control mode, close the plurality of motors, simultaneously open the electromagnetic valves corresponding to the axles where the plurality of motors are located in the hydraulic braking device to output hydraulic pressure to the plurality of brakes, and control the plurality of brakes according to the braking torques required by the wheels corresponding to the plurality of motors to output corresponding braking torques.

6. The active safety control system for the vehicle as described in any of claims 1-5, **characterized by** further comprising:
a pedal sensation simulator, configured to feed pedal sensation without hydraulic fluctuation back to the brake pedal of the vehicle, and/or
**characterized in that** the plurality of wheel speed detection devices comprise a plurality of rotary transformers and/or a plurality of wheel speed sensors.

7. An active safety control method for a vehicle, comprising the steps of:
detecting pedal signals of the vehicle, detecting speeds of wheels and generating wheel speed detection signals (S401);
obtaining braking torques according to the pedal signals and the wheel speed detection signals (S402);
detecting the states of a plurality of motors of the vehicle, and determining a corresponding braking mode according to the states of the plurality of motors (S403);
**characterized by** controlling a plurality of brakes, the plurality of motors and a hydraulic braking device of the vehicle according to the braking mode and the braking torques (S404),
wherein the step of determining a corresponding braking mode according to the states of the plurality of motors comprises:
when the plurality of motors are all in a normal state, determining that the corresponding braking mode is a regenerative braking control mode;
when one motor or two motors on the same axle among the plurality of motors are in a failure state, determining that the corresponding braking mode is a hybrid braking control mode; and
when two motors on different axles or more than two motors among the plurality of motors are in a failure state, determining that the corresponding braking mode is a hydraulic braking control mode.

8. The active safety control method for the vehicle as described in claim 7, **characterized in that** the step of obtaining braking torques according to the pedal signals and the wheel speed detection signals specifically comprises:
judging a required braking deceleration of the vehicle according to the pedal signals, and calculating braking torques required by the plurality of wheels according to the required braking deceleration and the wheel speed detection signals.

9. The active safety control method for the vehicle as described in claim 7 or 8, **characterized in that** when the braking mode is the regenerative braking control mode, the step of controlling the plurality of brakes, the plurality of motors and the hydraulic braking device according to the braking mode and the braking intention specifically comprises:
controlling the plurality of motors to be converted into a generator working mode, and driving rotors of the plurality of motors to cut magnetic induction lines according to the braking torques required by the plurality of wheels to output corresponding regenerative braking torques;
sending the regenerative braking torques to the corresponding wheels; and
storing the electrical energy generated when the rotors of the plurality of motors cut magnetic induction lines into the power battery.

10. The active safety control method for the vehicle as described in any of claims 7-9, **characterized in that** when the braking mode is the hybrid braking control mode, the step of controlling the plurality of brakes, the plurality of motors and the hydraulic braking device according to the braking mode and the braking torques specifically comprises:
closing the two motors on the axle where the failing motor is located;
controlling the remaining motors to be converted into a generator working mode, and driving rotors of the remaining motors to cut magnetic induction lines according to the braking torques required by the wheels corresponding to the remaining motors to output corresponding regenerative braking torques;
sending the regenerative braking torques to the corresponding wheels; and
opening an electromagnetic valve corresponding to the axle where the failing motor is located in the hydraulic braking device to output hydraulic pressure to the brakes corresponding to the two motors, and controlling the brakes according to the braking torques required by the wheels corresponding to the two motors to output corresponding braking torques.

11. The active safety control method for the vehicle as described in any of claims 7-10, **characterized in that** when the braking mode is the hydraulic braking control mode, the step of controlling the plurality of brakes, the plurality of motors and the hydraulic braking device according to the braking mode and the braking intention specifically comprises:
closing the plurality of motors, and simultaneously opening the electromagnetic valves corresponding to the axles where the plurality of motors are located in the hydraulic braking device to output hydraulic pressure to the plurality of brakes; and
controlling the plurality of brakes according to the braking torques required by the wheels corresponding to the plurality of motors to output corresponding braking torques.

12. The active safety control method for the vehicle as described in any of claims 7-11, **characterized by** further comprising a step of:
feeding pedal sensation without hydraulic fluctuation back to the brake pedal of the vehicle.

13. A vehicle, comprising the active safety control system for the vehicle as described in any of claims 1-6, a plurality of wheels (11), a power battery (70), a plurality of motors (10) arranged on the plurality of wheels, a plurality of brakes arranged on the plurality of wheels and a hydraulic braking device, wherein the active safety control system is connected with the plurality of motors, the plurality of brakes and the hydraulic braking device respectively, and the power battery is connected with the plurality of motors respectively.

## Patentansprüche

1. Aktives Sicherheitssteuersystem für ein Fahrzeug, umfassend:
eine Pedalerfassungsvorrichtung (40), die dazu eingerichtet ist, Pedalsignale des Fahrzeugs zu erfassen;
eine Motorzustands-Erfassungsvorrichtung (50), die dazu eingerichtet ist, die Zustände einer Mehrzahl von Motoren (10) des Fahrzeugs zu erfassen
eine Vielzahl von Raddrehzahlerfassungsvorrichtungen (60), die an einer Vielzahl von Rädern (11) des Fahrzeugs angeordnet und dazu eingerichtet sind, Drehzahlen der Räder zu erfassen und Raddrehzahlerfassungssignale zu erzeugen; und
eine Steuervorrichtung (80), die dazu eingerichtet ist, Bremsmomente gemäß den Pedalsignalen und den Radgeschwindigkeits-Erfassungssignalen zu erhalten, einen entsprechenden Bremsmodus gemäß den Zuständen der Mehrzahl von Motoren zu bestimmen, **dadurch gekennzeichnet, dass** die Steuervorrichtung (80) dazu eingerichtet ist, eine Mehrzahl von Bremsen (20), die Mehrzahl von Motoren und eine hydraulische Bremsvorrichtung des Fahrzeugs gemäß dem Bremsmodus und den Bremsmomenten zu steuern,
wobei die Steuervorrichtung (80) ferner dazu eingerichtet ist:
wenn die Mehrzahl der Motoren (10) alle in einem normalen Zustand sind, zu bestimmen, dass der entsprechende Bremsmodus ein regenerativer Bremssteuermodus ist;
wenn ein Motor oder zwei Motoren auf der gleichen Achse unter der Vielzahl von Motoren in einem Fehlerzustand sind, zu bestimmen, dass der entsprechende Bremsmodus ein Hybridbremssteuermodus ist; und
wenn zwei Motoren auf verschiedenen Achsen oder mehr als zwei Motoren unter der Vielzahl von Motoren in einem Fehlerzustand sind, bestimmen, dass der entsprechende Bremsmodus ein hydraulischer Bremssteuermodus ist.

2. Aktives Sicherheitssteuersystem für das Fahrzeug nach Anspruch 1, **dadurch gekennzeichnet, dass** die Steuervorrichtung (80) dazu eingerichtet ist,:
eine erforderliche Bremsverzögerung des Fahrzeugs gemäß den Pedalsignalen zu erhalten, und die von den mehreren Rädern benötigten Bremsmomente gemäß der erforderlichen Bremsverzögerung und den Raddrehzahlerfassungssignalen zu erhalten, und/oder
dass der Bremsmodus einen regenerativen Bremssteuermodus, einen Hybrid-Bremssteuermodus und einen hydraulischen Bremssteuermodus umfasst.

3. Aktives Sicherheitssteuersystem für das Fahrzeug nach Anspruch 1 oder 2, **dadurch gekennzeichnet, dass** die Steuervorrichtung (80) dazu eingerichtet ist:
wenn der Bremsmodus der regenerative Bremssteuermodus ist, die Vielzahl von Motoren zu steuern, um in einen Generatorarbeitsmodus einzutreten, Rotoren der Vielzahl von Motoren anzutreiben, um magnetische Induktionslinien gemäß den von der Vielzahl von Rädern benötigten Bremsmomenten zu schneiden, um entsprechende regenerative Bremsmomente auszugeben, die regenerativen Bremsmomente zu den entsprechenden Rädern zu senden, und die elektrische Energie, die erzeugt wird, wenn die Rotoren der Vielzahl von Motoren magnetische Induktionslinien schneiden, in der Leistungsbatterie zu speichern.

4. Aktives Sicherheitssteuersystem für das Fahrzeug nach einem der vorhergehenden Ansprüche, **dadurch gekennzeichnet, dass** die Steuervorrichtung (80) dazu eingerichtet ist:
wenn der Bremsmodus der Hybridbremssteuermodus ist, die beiden Motoren an der Achse, an der sich der ausgefallene Motor befindet, zu schließen, die verbleibenden Motoren so zu steuern, dass sie in einen Generatorarbeitsmodus umgewandelt werden, die Rotoren der verbleibenden Motoren so anzutreiben, dass sie magnetische Induktionsleitungen entsprechend den Bremsmomenten schneiden, die von den Rädern, die den verbleibenden Motoren entsprechen, benötigt werden, um entsprechende regenerative Bremsmomente auszugeben, und die regenerativen Bremsmomente an die entsprechenden Räder zu senden; und
ein elektromagnetisches Ventil in der hydraulischen Bremsvorrichtung zu öffnen, das der Achse entspricht, an der sich der ausgefallene Motor befindet, um Hydraulikdruck an die den beiden Motoren entsprechenden Bremsen auszugeben, und Steuern der Bremsen entsprechend den Bremsmomenten, die von den den beiden Motoren entsprechenden Rädern benötigt werden, um entsprechende Bremsmomente auszugeben.

5. Aktives Sicherheitssteuersystem für das Fahrzeug, wie in einem der vorhergehenden Ansprüche beschrieben, **dadurch gekennzeichnet, dass** die Steuervorrichtung dazu eingerichtet ist:
wenn der Bremsmodus der hydraulische Bremssteuermodus ist, die Mehrzahl von Motoren zu schließen, gleichzeitig die elektromagnetischen Ventile in der hydraulischen Bremsvorrichtung zu öffnen, die den Achsen entsprechen, an denen die Mehrzahl von Motoren angeordnet sind, um hydraulischen Druck an die Mehrzahl von Bremsen auszugeben, und die Mehrzahl von Bremsen entsprechend den Bremsmomenten zu steuern, die von den Rädern benötigt werden, die der Mehrzahl von Motoren entsprechen, um entsprechende Bremsmomente auszugeben.

6. Aktives Sicherheitssteuersystem für das Fahrzeug, wie in einem der Ansprüche 1-5 beschrieben, **dadurch gekennzeichnet, dass** es ferner umfasst:
einen Pedalempfindungssimulator, der dazu eingerichtet ist, die Pedalempfindung ohne hydraulische Schwankung auf das Bremspedal des Fahrzeugs zurückzuführen, und/oder
**dadurch gekennzeichnet, dass** die Vielzahl von Raddrehzahlerfassungsvorrichtungen eine Vielzahl von Drehtransformatoren und/oder eine Vielzahl von Raddrehzahlsensoren umfasst.

7. Aktives Sicherheitssteuerverfahren für ein Fahrzeug, das die folgenden Schritte umfasst:
Erfassen von Pedalsignalen des Fahrzeugs, Erfassen von Radgeschwindigkeiten und Erzeugen von Radgeschwindigkeitserfassungssignalen (S401);
Ermitteln von Bremsmomenten entsprechend den Pedalsignalen und den Raddrehzahlerfassungssignalen (S402);
Erfassen der Zustände einer Mehrzahl von Motoren des Fahrzeugs und Bestimmen eines entsprechenden Bremsmodus gemäß den Zuständen der Mehrzahl von Motoren (S403);
**gekennzeichnet durch** ein Steuern einer Vielzahl von Bremsen, der Mehrzahl von Motoren und einer hydraulischen Bremsvorrichtung des Fahrzeugs gemäß dem Bremsmodus und den Bremsmomenten (S404),
wobei der Schritt des Bestimmens eines entsprechenden Bremsmodus gemäß den Zuständen der Mehrzahl von Motoren umfasst:
wenn die Mehrzahl der Motoren alle in einem normalen Zustand sind, Bestimmen, dass der entsprechende Bremsmodus ein regenerativer Bremssteuermodus ist;
wenn ein Motor oder zwei Motoren auf der gleichen Achse unter der Vielzahl von Motoren in einem Fehlerzustand sind, Bestimmen, dass der entsprechende Bremsmodus ein Hybridbremssteuermodus ist; und
wenn zwei Motoren auf verschiedenen Achsen oder mehr als zwei Motoren unter der Vielzahl von Motoren in einem Fehlerzustand sind, Bestimmen, dass der entsprechende Bremsmodus ein hydraulischer Bremssteuermodus ist.

8. Aktives Sicherheitssteuerverfahren für das Fahrzeug wie in Anspruch 7 beschrieben, **dadurch gekennzeichnet, dass** der Schritt des Erhaltens von Bremsmomenten gemäß den Pedalsignalen und den Raddrehzahlerfassungssignalen insbesondere umfasst:
Beurteilen einer erforderlichen Bremsverzögerung des Fahrzeugs gemäß den Pedalsignalen, und Berechnen der von der Vielzahl der Räder benötigten Bremsmomente gemäß der erforderlichen Bremsverzögerung und den Raddrehzahlerfassungssignalen.

9. Aktives Sicherheitssteuerverfahren für das Fahrzeug nach Anspruch 7 oder 8, **dadurch gekennzeichnet, dass**, wenn der Bremsmodus der regenerative Bremssteuermodus ist, der Schritt des Steuerns der Vielzahl von Bremsen, der Mehrzahl von Motoren und der hydraulischen Steuervorrichtung gemäß dem Bremsmodus und der Bremsabsicht spezifisch umfasst:
Steuern der Mehrzahl von Motoren, um in einen Generator-Arbeitsmodus umgewandelt zu werden, und Antreiben von Rotoren der Mehrzahl von Motoren, um magnetische Induktionslinien gemäß den von der Vielzahl von Rädern benötigten Bremsmomenten zu schneiden, um entsprechende regenerative Bremsmomente auszugeben;
Senden der regenerativen Bremsmomente an die entsprechenden Räder; und
Speichern der elektrischen Energie, die erzeugt wird, wenn die Rotoren der Mehrzahl von Motoren magnetische Induktionslinien schneiden, in der Leistungsbatterie.

10. Aktives Sicherheitssteuerverfahren für das Fahrzeug, wie in einem der Ansprüche 7-9 beschrieben, **dadurch gekennzeichnet, dass**, wenn der Bremsmodus der Hybridbremssteuermodus ist, der Schritt des Steuerns der Vielzahl von Bremsen, der Mehrzahl von Motoren und der hydraulischen Steuervorrichtung gemäß dem Bremsmodus und den Bremsmomenten speziell umfasst:
Schließen der beiden Motoren an der Achse, an der sich der fehlerhafte Motor befindet;
Steuern der verbleibenden Motoren, um in einen Generatorarbeitsmodus umgewandelt zu werden, und Antreiben der Rotoren der verbleibenden Motoren, um magnetische Induktionslinien gemäß den Bremsmomenten zu schneiden, die von den Rädern benötigt werden, die den verbleibenden Motoren entsprechen, um entsprechende regenerative Bremsmomente auszugeben;
Senden der regenerativen Bremsmomente an die entsprechenden Räder; und
Öffnen eines elektromagnetischen Ventils in der hydraulischen Bremsvorrichtung, das der Achse entspricht, an der sich der fehlerhafte Motor befindet, um Hydraulikdruck an die den beiden Motoren entsprechenden Bremsen auszugeben, und Steuern der Bremsen entsprechend den Bremsmomenten, die von den den beiden Motoren entsprechenden Rädern benötigt werden, um entsprechende Bremsmomente auszugeben.

11. Aktives Sicherheitssteuerverfahren für das Fahrzeug nach einem der Ansprüche 7 bis 10, **dadurch gekennzeichnet, dass**, wenn der Bremsmodus der hydraulische Bremssteuermodus ist, der Schritt des Steuerns der Vielzahl von Bremsen, der Mehrzahl von Motoren und der hydraulischen Steuervorrichtung gemäß dem Bremsmodus und der Bremsabsicht speziell umfasst:
Schließen der Mehrzahl von Motoren und gleichzeitiges Öffnen der elektromagnetischen Ventile in der hydraulischen Bremsvorrichtung, die den Achsen entsprechen, an denen die Mehrzahl von Motoren angeordnet sind, um Hydraulikdruck an die Vielzahl von Bremsen auszugeben; und
Steuern der Vielzahl von Bremsen gemäß den Bremsmomenten, die von den Rädern benötigt werden, die der Mehrzahl von Motoren entsprechen, um entsprechende Bremsmomente auszugeben.

12. Aktives Sicherheitssteuerverfahren für das Fahrzeug, wie in einem der Ansprüche 7-11 beschrieben, **dadurch gekennzeichnet, dass** es weiterhin folgenden Schritt umfasst:
Rückführen von Pedalempfindung ohne hydraulische Schwankung auf das Bremspedal des Fahrzeugs.

13. Fahrzeug, umfassend das aktive Sicherheitssteuersystem für das Fahrzeug, wie in einem der Ansprüche 1-6 beschrieben, eine Vielzahl von Rädern (11), eine Leistungsbatterie (70), eine Mehrzahl von Motoren (10), die an der Vielzahl von Rädern angeordnet sind, eine Vielzahl von Bremsen, die an der Vielzahl von Rädern angeordnet sind, und eine hydraulische Bremsvorrichtung, wobei das aktive Sicherheitssteuersystem jeweils mit der Mehrzahl von Motoren, der Vielzahl von Bremsen und der hydraulischen Bremsvorrichtung verbunden ist, und die Leistungsbatterie jeweils mit der Mehrzahl von Motoren verbunden ist.

## Revendications

1. Système de commande de sécurité actif pour un véhicule, comprenant :
un dispositif de détection de pédale (40), configuré pour détecter les signaux de pédale du véhicule ;
un dispositif de détection de l'état des moteurs (50), configuré pour détecter les états d'une pluralité de moteurs (10) du véhicule ;
une pluralité de dispositifs de détection de vitesse de roue (60), disposés sur une pluralité de roues (11) du véhicule, et configurés pour détecter les vitesses des roues et générer des signaux de détection de vitesse de roue ; et
un dispositif de commande (80), configuré pour obtenir des couples de freinage en fonction des signaux de pédale et des signaux de détection de vitesse de roue, déterminer un mode de freinage correspondant selon les états de la pluralité de moteurs, **caractérisé en ce que** le dispositif de commande (80) est configuré pour commander une pluralité de freins (20), la pluralité de moteurs et un dispositif de freinage hydraulique du véhicule selon le mode de freinage et les couples de freinage,
dans lequel le dispositif de commande (80) est en outre configuré pour
lorsque la pluralité de moteurs (10) sont tous dans un état normal, déterminer que le mode de freinage correspondant est un mode de commande de freinage régénératif;
lorsqu'un moteur ou deux moteurs sur le même essieu parmi la pluralité de moteurs sont en état de défaillance, déterminer que le mode de freinage correspondant est un mode de commande de freinage hybride ; et
lorsque deux moteurs sur des essieux différents ou plus de deux moteurs parmi la pluralité de moteurs sont en état de défaillance, déterminer que le mode de freinage correspondant est un mode de commande de freinage hydraulique.

2. Système de commande de sécurité active pour le véhicule tel que décrit dans la revendication 1, **caractérisé en ce que** le dispositif de commande (80) est configuré pour :
obtenir une décélération de freinage requise du véhicule en fonction des signaux de pédale, et obtenir les couples de freinage requis par la pluralité de roues selon la décélération de freinage requise et les signaux de détection de la vitesse des roues, et/ou
**en ce que** le mode de freinage comprend un mode de commande de freinage régénératif, un mode de commande de freinage hybride et un mode de commande de freinage hydraulique.

3. Système de commande de sécurité actif pour le véhicule selon la revendication 1 ou 2, **caractérisé en ce que** le dispositif de commande (80) est configuré pour :
lorsque le mode de freinage est le mode de commande de freinage régénératif, commander la pluralité de moteurs pour entrer dans un mode de fonctionnement de générateur, entraîner les rotors de la pluralité de moteurs pour couper les lignes d'induction magnétique selon les couples de freinage requis par la pluralité de roues pour produire des couples de freinage régénératif correspondants, envoyer les couples de freinage régénératif aux roues correspondantes, et stocker l'énergie électrique générée lorsque les rotors de la pluralité de moteurs coupent les lignes d'induction magnétique dans la batterie de puissance.

4. Système de commande de sécurité actif pour le véhicule selon l'une des revendications précédentes, **caractérisé en ce que** le dispositif de commande (80) est configuré pour :
lorsque le mode de freinage est le mode de commande de freinage hybride, fermer les deux moteurs sur l'essieu où se trouve le moteur défaillant, commander les moteurs restants pour les convertir en un mode de fonctionnement en générateur, entraîner les rotors des moteurs restants pour couper les lignes d'induction magnétique selon les couples de freinage requis par les roues correspondant aux moteurs restants pour produire les couples de freinage régénératif correspondants, et envoyer les couples de freinage régénératif aux roues correspondantes ; et
ouvrir une soupape électromagnétique dans le dispositif de freinage hydraulique, correspondant à l'essieu où se trouve le moteur défaillant, afin de délivrer la pression hydraulique aux freins correspondant aux deux moteurs, et commander les freins selon les couples de freinage requis par les roues correspondant aux deux moteurs pour délivrer les couples de freinage correspondants.

5. Système de commande de sécurité actif pour le véhicule selon l'une des revendications précédentes, **caractérisé en ce que** le dispositif de commande est configuré pour :
lorsque le mode de freinage est le mode de commande de freinage hydraulique, fermer la pluralité de moteurs, ouvrir simultanément les soupapes électromagnétiques dans le dispositif de freinage hydraulique correspondant aux essieux où se trouve la pluralité de moteurs pour délivrer la pression hydraulique à la pluralité de freins, et commander la pluralité de freins selon les couples de freinage requis par les roues correspondant à la pluralité de moteurs pour délivrer les couples de freinage correspondants.

6. Système de commande de sécurité actif pour le véhicule comme décrit dans l'une des revendications 1 à 5, **caractérisé en ce qu'**il comprend en outre
un simulateur de sensation de pédale, configuré pour renvoyer une sensation de pédale sans fluctuation hydraulique à la pédale de frein du véhicule, et/ou
**caractérisé en ce que** la pluralité de dispositifs de détection de la vitesse de roue comprend une pluralité de transformateurs rotatifs et/ou une pluralité de capteurs de vitesse de roue.

7. Procédé de commande de sécurité actif pour un véhicule, comprenant les étapes suivantes
détecter des signaux de pédale du véhicule, détecter des vitesses de roue et générer des signaux de détection de vitesse de roue (S401) ;
obtenir des couples de freinage selon les signaux de pédale et les signaux de détection de la vitesse des roues (S402) ;
détecter les états d'une pluralité de moteurs du véhicule, et déterminer un mode de freinage correspondant selon les états de la pluralité de moteurs (S403) ;
**caractérisé par** une commande d'une pluralité de freins, de la pluralité de moteurs et d'un dispositif de freinage hydraulique du véhicule selon le mode de freinage et les couples de freinage (S404),
dans lequel l'étape de déterminer un mode de freinage correspondant selon les états de la pluralité de moteurs comprend :
lorsque la pluralité de moteurs sont tous dans un état normal, déterminer que le mode de freinage correspondant est un mode de commande de freinage régénératif ;
lorsqu'un moteur ou deux moteurs sur le même essieu parmi la pluralité de moteurs sont en état de défaillance, déterminer que le mode de freinage correspondant est un mode de commande de freinage hybride ; et
lorsque deux moteurs sur des essieux différents ou plus de deux moteurs parmi la pluralité de moteurs sont en état de défaillance, déterminer que le mode de freinage correspondant est un mode de commande de freinage hydraulique.

8. Procédé de commande de sécurité actif pour le véhicule comme décrit dans la revendication 7, **caractérisé en ce que** l'étape d'obtention des couples de freinage selon les signaux de pédale et les signaux de détection de la vitesse des roues comprend spécifiquement :
juger une décélération de freinage requise du véhicule selon les signaux de pédale, et calculer les couples de freinage requis par la pluralité de roues selon la décélération de freinage requise et les signaux de détection de la vitesse des roues.

9. Procédé de commande de sécurité actif pour le véhicule selon la revendication 7 ou 8, **caractérisé en ce que** lorsque le mode de freinage est le mode de commande de freinage régénératif, l'étape de commander la pluralité de freins, la pluralité de moteurs et le dispositif de freinage hydraulique selon le mode de freinage et l'intention de freinage comprend spécifiquement :
commander la pluralité de moteurs à convertir en un mode de fonctionnement de générateur, et entraîner les rotors de la pluralité de moteurs pour couper les lignes d'induction magnétique selon les couples de freinage requis par la pluralité de roues pour produire des couples de freinage régénératif correspondants ;
envoyer les couples de freinage régénératif aux roues correspondantes ; et
stocker l'énergie électrique générée lorsque les rotors de la pluralité de moteurs coupent les lignes d'induction magnétique dans la batterie de puissance.

10. Procédé de commande de sécurité actif pour le véhicule selon l'une des revendications 7 à 9, **caractérisé en ce que**, lorsque le mode de freinage est le mode de commande de freinage hybride, l'étape de commander la pluralité de freins, la pluralité de moteurs et le dispositif de freinage hydraulique selon le mode de freinage et les couples de freinage comprend spécifiquement :
fermer les deux moteurs sur l'essieu où se trouve le moteur défaillant;
commander les moteurs restants pour les convertir en un mode de fonctionnement générateur, et entraîner les rotors des moteurs restants pour couper les lignes d'induction magnétique selon les couples de freinage requis par les roues correspondant aux moteurs restants pour produire les couples de freinage régénératif correspondants ;
envoyer les couples de freinage régénératif aux roues correspondantes ; et
ouvrir une soupape électromagnétique dans le dispositif de freinage hydraulique, correspondant à l'essieu où se trouve le moteur défaillant, afin de délivrer la pression hydraulique aux freins correspondant aux deux moteurs, et commander les freins selon les couples de freinage requis par les roues correspondant aux deux moteurs pour délivrer les couples de freinage correspondants.

11. Procédé de commande de sécurité actif pour le véhicule comme décrit dans l'une quelconque des revendications 7 à 10, **caractérisé en ce que** lorsque le mode de freinage est le mode de commande de freinage hydraulique, l'étape de commander la pluralité de freins, la pluralité de moteurs et le dispositif de freinage hydraulique selon le mode de freinage et l'intention de freinage comprend spécifiquement :
fermer la pluralité de moteurs, et ouvrir simultanément les soupapes électromagnétiques dans le dispositif de freinage hydraulique correspondant aux essieux où se trouve la pluralité de moteurs pour délivrer la pression hydraulique à la pluralité de freins ; et
commander la pluralité de freins selon les couples de freinage requis par les roues correspondant à la pluralité de moteurs pour produire les couples de freinage correspondants.

12. Procédé de contrôle de la sécurité actif pour le véhicule comme décrit dans l'une des revendications 7 à 11, **caractérisé en ce qu'**il comprend en outre une étape de :
renvoyer une sensation de pédale sans fluctuation hydraulique à la pédale de frein du véhicule.

13. Véhicule, comprenant le système de commande de sécurité actif pour le véhicule selon l'une quelconque des revendications 1 à 6, une pluralité de roues (11), une batterie de puissance (70), une pluralité de moteurs (10) disposés sur la pluralité de roues, une pluralité de freins disposés sur la pluralité de roues et un dispositif de freinage hydraulique, dans lequel le système de commande de sécurité actif est connecté à la pluralité de moteurs, à la pluralité de freins et au dispositif de freinage hydraulique respectivement, et la batterie de puissance est connectée à la pluralité de moteurs respectivement.
